# EUROPÄISCHE PATENTANMELDUNG

(11) **EP 1 041 224 A2**
(43) Veröffentlichungstag der Anmeldung: **04.10.2000**
(21) Anmeldenummer: 00104196.1
(22) Anmeldetag: 01.03.2000
(51) Int. Cl.: E05B 49/00

(54) **Vorrichtung und Verfahren zur Freigabe einer Sicherungseinrichtung, insbesondere einer Zugangseinrichtung für ein Kraftfahrzeug**

(30) Priorität: 29.03.1999 DE 19914306; 31.08.1999 DE 19941350
(71) Anmelder: Mannesmann VDO Aktiengesellschaft, 60388 Frankfurt am Main (DE)
(72) Erfinder: Berberich, Reinhold, 60439 Frankfurt a.M. (DE); Sievers, Christpher, 63450 Hanau (DE); Bürger, Thorsten, 65824 Schwalbach (DE); Hassler, Gregor, 65520 Bad Camberg (DE)
(74) Vertreter: Rassler, Andrea, Dipl.-Phys.

(57) **Zusammenfassung**

Bei einer Vorrichtung und bei einem Verfahren zur Freigabe und/oder Aktivierung/Deaktivierung einer Sicherungseinrichtung, insbesondere einer Zugangseinrichtung für ein Kraftfahrzeug, bei welcher nach Erhalt einer durch einen Sender einer Übertragungseinrichtung ausgesendeten Reizsequenz Startsignals von einer tragbaren Sendeeinheit (Funkschlüssel) eine codierte Information (Freigabesignal) ausgesendet und von einem Empfänger der Übertragungseinrichtung empfangen wird, wobei ein Steuergerät das empfangene Freigabesignal mit einer vorgegebenen codierten Information vergleicht und bei Übereinstimmung ein Ansteuersignal an die Sicherungseinrichtung abgibt, wird bei Vorhandensein mehrerer passender Funkschlüssel im Erfassungsbereich der Vorrichtung die Übertragungsqualität zwischen Sicherungseinrichtung und Funkschlüsseln geprüft. Nur genau derjenige der Funkschlüssel wird zur Aussendung eines Freigabesignals herangezogen, der über die günstigsten Übertragungsbedingungen zur Sicherungseinrichtung verfügt.

## Beschreibung

Die Erfindung betrifft eine Vorrichtung zur Freigabe und/oder Aktivierung/Deaktivierung einer Sicherungseinrichtung, insbesondere einer Zugangseinrichtung für ein Kraftfahrzeug, bei welcher nach Erhalt einer durch einen Sender einer Übertragungseinrichtung ausgesendeten Reizsequenz von einer tragbaren Sendeeinheit (Funkschlüssel) eine codierte Information (Freigabesignal) ausgesendet und von einem Empfänger der Übertragungseinrichtung empfangen wird, wobei ein Steuergerät das empfangene Freigabesignal mit einer vorgegebenen codierten Information vergleicht und bei Übereinstimmung ein Ansteuersignal an die Sicherungseinrichtung abgibt.

Zur Verbesserung des Benutzerkomforts von Zugangssicherungseinrichtungen, beispielsweise der Zentralverriegelung von Kraftfahrzeugen, kommen in neuester Zeit elektronische Funkschlüssel zum Einsatz, welche auf Knopfdruck oder vollautomatisch ein elektromagnetisches Freigabesignal an die Sicherungseinrichtung aussenden, worauf diese den Zugang freigibt. Bei diesen Einrichtungen ersetzen die Funkschlüssel die herkömmlichen mechanischen Schlüssel.

Aus WO 92/18732 ist eine Vorrichtung zum Betreiben einer Türverriegelungs- und/oder Alarmanlage bekannt. Bei dieser Anlage wird vom Nutzer ein Funkschlüssel getragen, in welchem ein Freigabecode zur Aktivierung beziehungsweise Deaktivierung der genannten Sicherungseinrichtungen abgelegt ist. Im Kraftfahrzeug ist eine Übertragungsvorrichtung angeordnet, welche ein vom Funkschlüssel ausgesendetes Freigabesignal empfängt und mit einer abgespeicherten Codierung vergleicht. Bei Übereinstimmung der Codes wird ein Ansteuersignal an die Sicherungseinrichtung (Zentralverriegelung, Alarmanlage) ausgegeben.

Das Freigabesignal wird nur dann ausgesendet, wenn die den Funkschlüssel tragende Person in einem vorgegebenen Abstand zum Kraftfahrzeug steht, welcher innerhalb der Reichweite des Senders der Übertragungsvorrichtung liegt. Der Funkschlüssel wird durch eine Reizsequenz der Sicherungseinrichtung ohne manuelles Eingreifen des Nutzers aktiviert.

Ein derartiges System wird meistens mit mehreren passenden Funkschlüsseln ausgeliefert. Üblicherweise können diese Funkschlüssel an mehrere Benutzer des Fahrzeugs verteilt sein. So kann es passieren, daß die Sicherungseinrichtung nach Aussendung der Reizsequenz von mehreren in der Reichweite der Sicherungseinrichtung befindlichen Funkschlüsseln ein Antwortsignal erhält. Dies kann dadurch zu einer Kollision führen, daß alle Schlüssel unkoordiniert Signale senden, so daß das Steuergerät der Sicherungseinrichtung nicht in der Lage ist, ein Freigabesignal korrekt zu erkennen bzw. zu entscheiden, welches der Signale als Freigabesignal verwendet werden soll.

Es sind Systeme bekannt, die auf Verdacht alle Funkschlüssel eines Systems global adressieren und bei nicht eindeutiger Antwort einzelne Funkschlüssel selektiv der Reihe nach ansprechen. Dies hat den Nachteil, daß mit steigender Anzahl der für eine Sicherungseinrichtung zugelassenen Funkschlüssel, die sich in der Reichweite der Sicherungseinrichtung befinden, die für den Datenaustausch benötigte Zeit zunimmt, so daß dem Fahrzeugnutzer der Zugriff auf das Kraftfahrzeug erst nach einer spürbaren Zeitdauer ermöglicht wird.

Da die Signale der Funkschlüssel in der Regel recht schwach sind und auf längere Distanz schlecht übertragen werden, können bei schlechter Übertragungsstrecke Störungen auftreten. Die Sicherungseinrichtung wird im Falle einer Störung erneut einen Funkschlüssel auswählen müssen und diesen zur Aussendung eines Freigabesignals auffordern. Dadurch entsteht wiederum eine merkliche Verzögerung.

Aufgabe der vorliegenden Erfindung ist es, eine Vorrichtung der eingangs genannten Art anzugeben, bei welcher ein Funkschlüssel aus einer Menge vorhandener Funkschlüssel ohne merkliche Zeitverzögerung zur Übertragung des Freigabesignals herangezogen werden kann. Es ist ferner ein Verfahren zu ihrem Betrieb anzugeben.

Erfindungsgemäß wird die Aufgabe dadurch gelöst, daß die Reizsequenz (Challenge-Signal) aus einem ersten Telegrammteil mit einer Kennung der Sicherungseinrichtung und einem zweiten Telegrammteil besteht, wobei durch den ersten Telegrammteil die in einem vorgegebenen Bereich eines Senders der Übertragungseinrichtung befindlichen zu der Sicherungseinrichtung passenden Funkschlüssel zur gegeneinander versetzten Abgabe je eines Antwortsignals (Response-Signale) zu unterschiedlichen Zeitpunkten während der Übertragung des zweiten Telegrammteils angeregt werden, daß das Steuergerät anhand der Antwortsignale einen geeigneten Funkschlüssel aus der Menge auswählt und ein Auswahlsignal abgibt, welches den ausgewählten Funkschlüssel zur Abgabe des Freigabesignals veranlaßt.

Ein Vorteil der Erfindung besteht darin, daß noch während der Aussendung der Reizsequenz eine Rückmeldung über das Vorhandensein der in der Reichweite der Sicherungseinrichtung vorhandenen Funkschlüssel erfolgt. Somit kann das Steuergerät ohne Zeitverzögerung aus den Antwortsignalen einen geeigneten der Funkschlüssel auswählen und unmittelbar im Anschluß an die übrige Reizsequenz das Auswahlsignal für den gewünschten Funkschlüssel als Teil der Reizsequenz aussenden. Es treten keine Zeitverzögerungen durch die Auswertung der Antwortsignale der verschiedenen Funkschlüssel auf Die für den Datenaustausch benötigte Zeit überschreitet insbesondere nicht die für die Aussendung der Reizsequenz notwendige Zeitdauer.

Bei einer ersten Ausgestaltung der Erfindung ist vorgesehen, daß zur Unterscheidung der Antwortsignale durch das Steuergerät die Antwortsignale der Funkschlüssel synchron zum zweiten Telegrammteil ausgebbar sind.

Die Antwortsignale können einfacher unterschieden werden, wenn die Antwortsignale jedes Funkschlüssels mit jeweils einer anderen Flanke des zweiten Telegrammteils synchronisiert sind.

Der Empfangsbereich der Übertragungseinrichtung ist zumeist auf wenige Meter oder Dezimeter beschränkt. Daher sind die Übertragungszeiten der Signale zwischen den Funkschlüsseln und der Übertragungseinrichtung vernachlässigbar. Das Aussenden der jeweiligen Flanken des zweiten Telegrammteils fällt annähernd zeitgleich mit dem Empfang der Antwortsignale zusammen und das Steuergerät kann feststellen, welcher Funkschlüssel geantwortet hat.

Alternativ dazu kann vorgesehen sein, daß die einzelnen Funkschlüssel ihre Antwortsignale in unterschiedlichen Zeitabständen nach Empfang des ersten Telegrammteils der Reizsequenz aussenden.

Das Steuergerät kann somit anhand der fest definierten Zeitpunkte über die Rückmeldung feststellen, welche Funkschlüssel sich in Reichweite befinden. Nachdem das Steuergerät einen der Funkschlüssel ausgewählt hat, fordert es diesen mit Wissen um die vorhandenen Funkschlüssel explizit dazu auf, das Freigabesignal zurückzusenden.

Um Signale parallel senden und empfangen zu können, hat es sich als vorteilhaft erwiesen, wenn die Reizsequenz in einem anderen Frequenzbereich abgestrahlt wird als die Antwortsignale.

Weiterhin ist es vorteilhaft, wenn die Reizsequenz und das Auswahlsignal als langwellige Signale und die Antwortsignale und das Freigabesignal als kurzwellige Signale übertragen werden. Auf diese Weise interferieren die Signale nicht miteinander und die tragbaren Funkschlüssel können sehr kompakt ausgeführt werden, da sie keinen Langwellensender benötigen.

Zur Bestimmung des zweiten Telegrammteils ist bei einer nächsten Ausgestaltung der Erfindung vorgesehen, daß die Übertragungseinrichtung eine erste Recheneinheit und jeder Funkschlüssel je eine zweite Recheneinheit aufweist, daß in den Recheneinheiten Algorithmen zur Bestimmung des zweiten Telegrammteils abgelegt sind und daß der zweite Telegrammteil nach jeder erfolgten Übertragung mit Hilfe der Algorithmen in den Recheneinheiten unabhängig voneinander neu bestimmt wird. Dadurch wird die Sicherheit der erfindungsgemäßen Vorrichtung gegen unbefugtes Betätigen verbessert.

Weitere vorteilhafte Funktionen lassen sich realisieren, wenn jedes Antwortsignal weitere für den jeweiligen Funkschlüssel charakteristische Informationen enthält. Auf diese Art und Weise können zum Beispiel bei der Nutzung der Erfindung in Hotels bei Abwesenheit des Zimmerbewohners nur die Funkschlüssel des Hotelpersonals freigegeben werden. Auch ist es möglich, einzelne passende Funkschlüssel zu sperren. So können beispielsweise verlorengegangene Funkschlüssel auf einfache Weise unbrauchbar gemacht werden, was einen Vorteil gegenüber der Verwendung mechanischer Schlüssel darstellt.

Bei einem Verfahren zur Freigabe und/oder Aktivierung/Deaktivierung einer Sicherungseinrichtung, insbesondere einer erfindungsgemäßen Vorrichtung, bei welcher nach Erhalt einer durch einen Sender einer Übertragungseinrichtung ausgesendeten Reizsequenz von einer tragbaren Sendeeinheit (Funkschlüssel) ein Freigabesignal ausgesendet und von einem Empfänger der Übertragungseinrichtung empfangen wird, wobei ein Steuergerät das empfangene Freigabesignal mit einer vorgegebenen codierten Information vergleicht und bei Übereinstimmung ein Ansteuersignal an die Sicherungseinrichtung abgibt, ist vorgesehen, daß bei Vorhandensein mehrerer passender Funkschlüssel die Übertragungsqualität zwischen Übertragungseinrichtung und Funkschlüsseln geprüft wird und daß nur derjenige der Funkschlüssel zur Aussendung eines Freigabesignals herangezogen wird, welcher über die günstigste Übertragungsstrecke zur Übertragung des Freigabesignals verfügt. Dies wird in der Regel derjenige Funkschlüssel sein, dessen Signale bei der Übertragung am wenigsten verrauscht sind oder durch andere Effekte gestört werden und der somit die zügigste und störungsärmste Durchführung der Übertragung des Freigabesignals erwarten läßt.

Es kann weiterhin vorgesehen sein, daß derjenige der Funkschlüssel ausgewählt wird, dessen Übertragungsstrecke die geringste Dämpfung/störungsärmste Übermittlung der übertragenen Signale aufweist. Dies ist normalerweise derjenige der Funkschlüssel, der sich im geringsten räumlichen Abstand zur Übertragungseinrichtung befindet.

Bei Vorhandensein nur eines einzigen Funkschlüssels im Erfassungsbereich kann geprüft werden, ob die Übertragungsqualität ausreichend ist. Ist dieses nicht der Fall, kann der Zugriff verweigert oder der Schlüssel erneut angesprochen werden.

Bei einer weiteren Ausgestaltung der Erfindung ist vorgesehen, daß jeder der Funkschlüssel die Feldstärke der von ihm empfangenen Reizsequenz feststellt und daß nur derjenige der Funkschlüssel zur Aussendung eines Freigabesignals aufgefordert wird, der die größte Empfangsfeldstärke festgestellt hat. Dazu kann ferner vorgesehen sein, daß jeder der Funkschlüssel den festgestellten Wert der Empfangsfeldstärke als Antwortsignal zurücksendet und daß das Steuergerät anhand der erhaltenen Werte den geeigneten Funkschlüssel auswählt und das Auswahlsignal aussendet.

Eine nächste Ausgestaltung der Erfindung sieht vor, daß der Wert der empfangenen Feldstärke als Breite der Antwortsignale codiert wird.

Bei einer anderen Ausgestaltung der Erfindung ist vorgesehen, daß aus der Intensität der Antwortsignale auf die Qualität der Rückübertragungsstrecke zwischen den Funkschlüsseln und der Übertragungseinrichtung geschlossen wird und daß ein Funkschlüssel, dessen Antwortsignal zu schwach ist, nicht zur Aussendung des Freigabesignals herangezogen wird.

Bei einer nächsten Ausgestaltung der Erfindung ist vorgesehen, daß jeder der Funkschlüssel die empfangene Reizsequenz wenigstens teilweise unverändert wieder zurücksendet (spiegelt) und daß das Steuergerät anhand von Signaleigenschaften (Empfangsfeldstärken) der wieder zurückerhaltenen Impulse den geeignetsten Funkschlüssel auswählt und das Auswahlsignal aussendet. Durch die Hin- und Rücksendung der Signale wird die zurückgelegte Strecke verdoppelt und die übertragenen Signale entsprechend stärker beeinflußt als bei einfacher Sendestrecke. Dadurch können sowohl die Hin- als auch die Rückstrecke in die Bewertung einbezogen werden. Ferner kann komplizierte Meßelektronik zur Messung der Signalfeldstärke in dem Steuergerät selbst untergebracht werden. Die Funkschlüssel können klein und einfach ausgeführt sein.

Ferner kann zur Verwirklichung des erfindungsgemäßen Verfahrens vorgesehen sein, daß daß die Übertragungsqualität zwischen der Übertragungseinheit und den Funkschlüsseln durch Messung der Dauer des eine vorgegebene Empfangsschwelle überschreitenden Teils eines übertragenen Signals ermittelt wird. Durch die an- und abschwellende Form des über Antennen drahtlos übertragenen Signals kann die Dauer des empfangenen, über der Schwelle liegenden Signalteils direkt zur Signalabschwächung in Relation gesetzt werden.

Dazu kann vorgesehen sein, daß jeder Funkschlüssel zu einem vorgegebenen Zeitpunkt Teile der Reizsequenz spiegelt, indem er den Signalanteil des Amplitudenverlaufs der Reizsequenz, der über seiner Empfangsschwelle liegt, als Impuls der Länge zur Übertragungseinrichtung zurücksendet, wobei die Länge des rückgesendeten Impulses von der Übertragungseinrichtung gemessen und als Entscheidungskriterium für die Auswahl eines bestimmten Funkschlüssels herangezogen wird.

Ausführungsbeispiele der Erfindung sind in der Zeichnung anhand mehrerer Figuren dargestellt und in der nachfolgenden Beschreibung näher erläutert. Es zeigt:
Fig. 1 ein Blockschaltbild einer erfindungsgemäßen Sicherungseinrichtung zusammen mit einem Funkschlüssel,
Fig. 2 ein mit einer Anzahl Funkschlüsseln kommunizierendes Kraftfahrzeug,
Fig. 3 ein Diagramm von bei der Durchführung eines erfindungsgemäßen Verfahrens übertragenen Signalen und
Fig. 4 eine Skizze zur Feldstärkemessung in einem Funkschlüssel.

Gleiche Teile sind in den Figuren mit gleichen Bezugszeichen versehen.

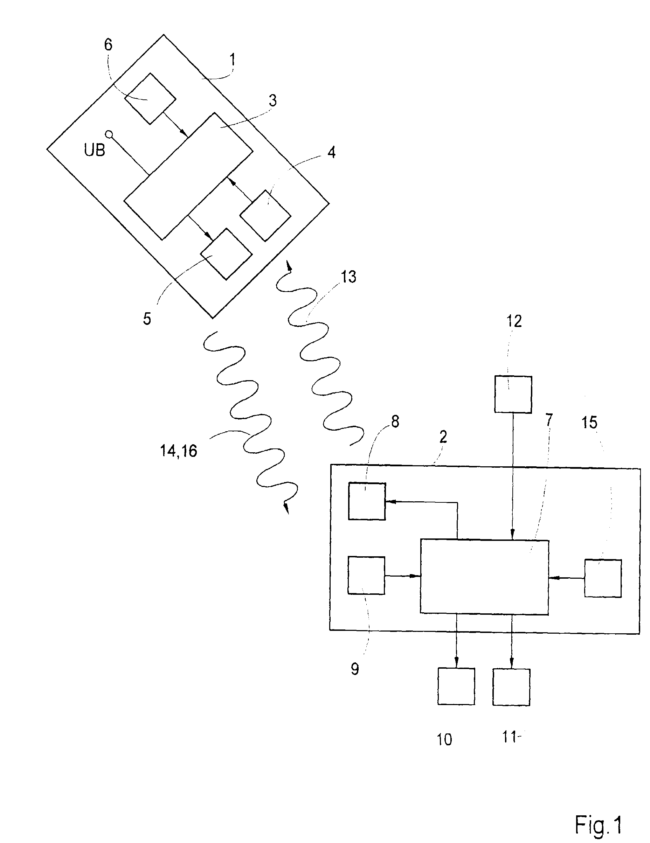

Bei dem in Fig. 1 gezeigten erfindungsgemäßen Fahrzeugzugangs- und Fahrberechtigungssystem wird durch eine berührungslose Abfrage eines als Sender 1 ausgebildeten Identifikationsgebers (Funkschlüssel) das Öffnen und das Starten eines Fahrzeugs wesentlich komfortabler gestaltet. Der Sender 1 kann dabei beliebig am Körper (zum Beispiel in der Hosen- oder Manteltasche) getragen werden und muß nicht explizit bedient werden.

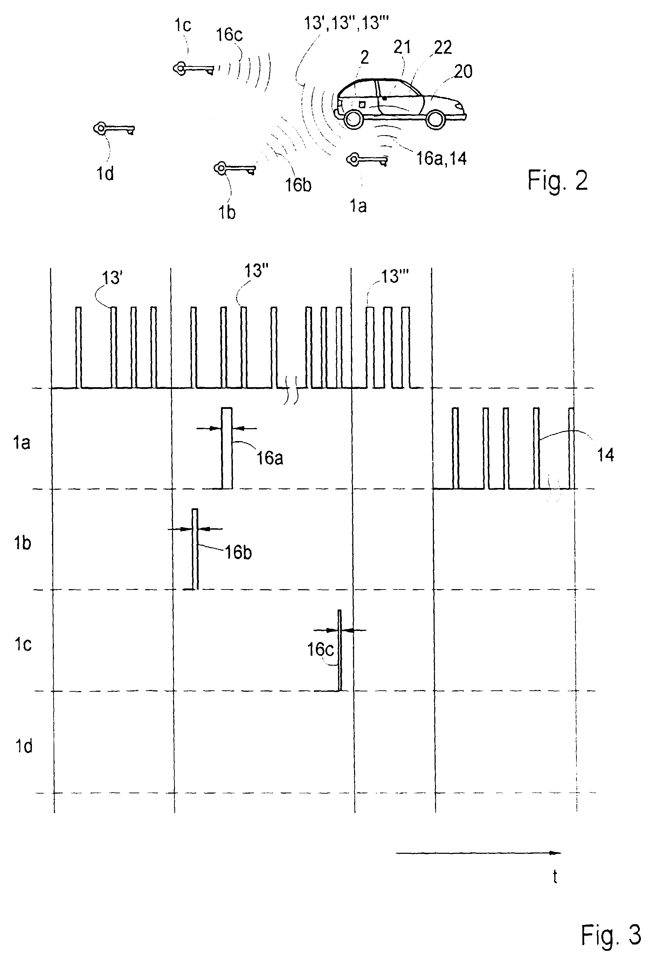

Die Vorrichtung weist eine als Sicherheitsgerät 2 ausgebildete Übertragungseinrichtung auf, welche in einem in Fig. 2 dargestellten Kraftfahrzeug 20 fest installiert ist. Der Funkschlüssel 1 enthält eine Recheneinheit 3, welche über einen Langwellenempfänger 4 und einen Kurzwellensender 5 verfügt. Von einem Zufallsgenerator 6 werden Zahlen generiert, aus welchen mit Hilfe eines in der Recheneinheit 3 abgelegten Algorithmus eine Codierung erzeugt wird.

Das Sicherheitsgerät 2 enthält ebenfalls eine Recheneinheit 7, die mit einem Langwellensender 8 und einem Kurzwellenempfänger 9 verbunden ist. Darüber hinaus stellt die Recheneinheit 7 ein Steuergerät dar, welches mit einer Zentralverriegelung 10 und einer Wegfahrsperre 11 des Kraftfahrzeugs zu deren Ansteuerung verbunden ist. Ein an einem Türgriff des Kraftfahrzeugs angeordneter Sensor 12 liefert ein Signal an die Recheneinheit 7, sobald der Türgriff 21 betätigt wird. Auch diese Recheneinheit 7 erhält eine Zufallszahl von einem Zufallsgenerator 15, welche sie mit Hilfe eines Algorithmus verarbeitet, der identisch mit dem in der Recheneinheit 3 abgelegten Algorithmus funktioniert.

Zwischen dem Funkschlüssel 1 und dem Sicherheitsgerät 2 werden berührungslos Signale ausgetauscht. Erhält die Recheneinheit 7 des Sicherheitsgeräts 2 ein Signal vom Sensor 12, erzeugt die Recheneinheit 7 eine Reizsequenz 13, welche über den Langwellensender 8 ausgesendet wird (Challenge). Diese Reizsequenz 13 wird vom Langwellenempfänger 4 des Funkschlüssels 1 empfangen, worauf die Recheneinheit 3 des Funkschlüssels 1 die Aussendung eines Freigabesignals 14 veranlaßt (Response).

Der Kurzwellenempfänger 9 des Sicherheitsgeräts 2 empfängt das Signal 14 und leitet es an die Recheneinheit 7 weiter, welche das Freigabesignal 14 mit einem in ihm gespeicherten oder durch den Algorithmus erzeugten Code vergleicht. Bei Übereinstimmung der Informationen gibt die Recheneinheit 7 entweder ein Ansteuersignal an die Zentralverriegelung 10 des Fahrzeugs zum Öffnen beziehungsweise Verschließen der Fahrzeugtüren 22 und/oder an eine Wegfahrsperre 11 zur Aktivierung beziehungsweise Deaktivierung des Antriebs des Kraftfahrzeugs 20 aus.

Fig. 2 zeigt das Kraftfahrzeug 20, welches mit dem Sicherheitsgerät 2 versehen ist. Das Kraftfahrzeug 20 ist von einer Anzahl von Funkschlüssein 1a bis 1d umgeben, die in der Figur als mechanische Schlüssel symbolisiert sind. Derartige Funkschlüssel können beispielsweise zur Betätigung des Zündschlosses auch tatsächlich über einen herkömmlichen mechanischen Schlüsselteil verfügen oder aber ganz ohne mechanische Komponenten aufgebaut sein.

Bei Betätigung eines Türgriffes 7 des Kraftfahrzeugs 1 wird eine Kommunikation zwischen dem Sicherheitsgerät 2 und den Funkschlüsseln 1a bis 1d eingeleitet und bei Auffinden eines passenden Funkschlüssels 1a das Kraftfahrzeug 20 entriegelt, noch bevor der Türgriff vollends betätigt wurde. Dieser Vorgang läuft in sehr kurzer Zeit ab, so daß die Tür durch Betätigen des Türgriffes so zügig geöffnet werden kann, als wäre sie nicht verschlossen gewesen. Ein Öffnen der Türschlösser mit Hilfe eines mechanischen Schlüssels entfällt. Auf die gleiche Weise lassen sich auch andere Sicherungsmechanismen, wie das Zündschloß des Kraftfahrzeugs 20 oder die Türschlösser eines Gebäudes, betätigen. Der Zugang zu verschlossenen Türen wird durch die bloße Anwesenheit eines passenden Funkschlüssels ermöglicht.

Der Aufbau der Reizsequenz 13 ist in Fig. 3 dargestellt. Die Recheneinheit 7 erzeugt nach Auftreten des Signals des Drucksensors 12 eine Datenfolge (Challenge-Signal), die sich aus drei Teilen zusammensetzt: einem der Fahrzeugkennung entsprechenden Festcode (erster Telegrammteil) 13' (8 bit), einem zweiten Telegrammteil 13'' (24 bit), sowie einem Auswahlsignal 13'''. Nach dem Erhalt der Fahrzeugkennung 13' senden die einzelnen sich in der Reichweite des Langwellensenders 8 aufhaltenden und so angesprochenen Funkschlüssel 1a bis 1c je ein Antwortsignal 16a bis 16c an die Recheneinheit 7 in dem Zeitabschnitt aus, in welchem der zweite Telegrammteil 13'' von dem Sicherheitsgerät 2 zum Funkschlüssel 1 übertragen wird.

In dem vorgegebenen Beispiel sind die Antwortsignale (Response-Signale) 16a bis 16c der einzelnen Funkschlüssel auf den zweiten Telegrammteil 13'' flankensynchronisiert. So erfolgt das Antwortsignal 16b des Funkschlüssels 1b gleichzeitig mit der Sendung des ersten Impulses des zweiten Telegrammteils 13''. Das Antwortsignal 16a des Funkschlüssels 1a wird zeitgleich mit dem zweiten Impuls des zweiten Telegrammteils 13'' vom Funkschlüssel 1a gesendet. Der Funkschlüssel 1d, welcher nicht in der Reichweite des Langwellensenders 4 liegt, kann die Fahrzeugkennung nicht empfangen und liefert somit auch kein Antwortsignal. Der Funkschlüssel 1c, welcher wiederum im Senderbereich liegt, liefert ein Antwortsignal 16c, welches zeitgleich mit der Endflanke des von der Recheneinheit 7 zu den Funkschlüsseln 1a bis 1d übertragenen zweiten Telegrammteils 13'' liegt.

Die Recheneinheit 7 wertet die von den einzelnen Funkschlüsseln 1a bis 1c erhaltenen Antwortsignale 16a bis 16c aus und bestimmt anhand der Intensität der Signale, daß im vorliegenden Fall der Funkschlüssel 1a sich am besten zur Signalübertragung eignet und das Freigabesignal 14 abgeben soll. Zu diesem Zweck wird an den zweiten Telegrammteil 13'' ein Auswahlsignal 13''' angehängt, welches den zweiten Funkschlüssel 1a anspricht. Dieser Funkschlüssel 1a strahlt nach Empfang des Auswahlsignals 13''' das Freigabesignal 14 aus. Dieses wird mit einer in dem Sicherheitsgerät 2 erzeugten codierten Information verglichen, wobei bei Übereinstimmung die Zentralverriegelung 10 und/oder die Wegfahrsperre 11 angesteuert werden. Der ganze Vorgang dauert nur Bruchteile einer Sekunde und ermöglicht es somit, die Tür automatisch zu entriegeln, noch bevor der Türgriff 7 vollends betätigt wurde, so daß bei dem Benutzer der Eindruck entsteht, die Tür sei nicht verschlossen gewesen.

Das Sicherheitsgerät 2 sendet im Langwellenbereich bei Frequenzen um 125 kHz und empfängt im Kurzweltenbereich bei Frequenzen von 315 MHz, 433 MHz oder 868 MHz. Die Funkschlüssel 1a bis 1d empfangen auf Langwelle und senden mit Kurzwelle.

Aufgrund des beschriebenen Verfahrens kann ohne zusätzlichen Zeitaufwand unabhängig von der im Abfragebereich vorhandenen Anzahl der Funkschlüssel der gewünschte Funkschlüssel angesprochen werden. Auf Mehrfachabfragen wird dabei vollkommen verzichtet.

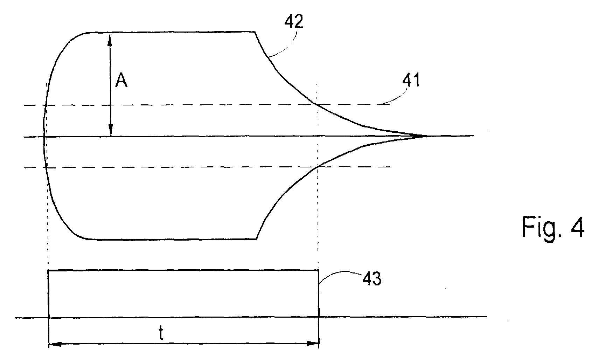

Bei dem Ausführungsbeispiel nach Fig. 3 wird die jeweilige Empfangsfeldstärke vom Funkschlüssel 1 zum Sicherheitsgerät 2 durch Pulsbreitenmodulation übertragen. Anhand von Fig. 4 wird im folgenden die Erzeugung der modulierten Impulse erläutert. Der Empfänger 4 (Fig. 1) eines Funkschlüssels 1 empfängt über eine definierte Amplituden-Schwelle 41 ein Signal 42, das in Fig. 4 zur Vereinfachung als Hüllkurve seines Schwingungszugs dargestellt ist und je nach Entfernung vom Sicherheitsgerät 2 der gesendeten Reizsequenz 13' gegenüber abgeschwächt ist. Der Funkschlüssel mißt nun die Dauer t des die Amplituden-Schwelle 41 überschreitenden Teils des empfangenen abgeschwächten Signals 42, die mit der Signaldämpfung und damit direkt mit der Entfernung zum Sender 8 korreliert, und sendet den Meßwert in pulsbreitencodierter Form im Antwortsignal 16 zurück. Das Sicherheitsgerät 2 wertet die Modulation der Antwortsignale 16a bis 16c der Funkschlüssel 1a bis 1c aus und ermittelt somit den Funkschlüssel mit dem besten Empfang.

Das Signal 42 wird im Empfänger 4 über eine Amplituden-Schwelle 41 in ein Rechtecksignal 43 der Länge t gewandelt. Ist der Funkschlüssel 1 weit von dem Sicherheitsgerät 2 entfernt, so verringert sich die Empfangsfeldstärke und damit die maximale Amplitude A des am Funkschlüssel 1 ankommenden Signals 42. Nach Umwandlung über die Amplituden-Schwelle entsteht ein Rechteck-Signal 43, dessen Länge t die Empfangsfeldstärke wiedergibt. Nach Übertragung eines dem Rechtecksignal entsprechend modulierten Impulses zum Sicherheitsgerät 2 kann anhand von dessen Breite die Empfangsqualität beim Funkschlüssel 1 bestimmt werden.

## Patentansprüche

1. Vorrichtung zur Freigabe und/oder Aktivierung/Deaktivierung einer Sicherungseinrichtung, insbesondere einer Zugangseinrichtung für ein Kraftfahrzeug, bei welcher nach Erhalt einer durch einen Sender einer Übertragungseinrichtung ausgesendeten Reizsequenz von einer tragbaren Sendeeinheit (Funkschlüssel) eine codierte Information (Freigabesignal) ausgesendet und von einem Empfänger der Übertragungseinrichtung empfangen wird, wobei ein Steuergerät das empfangene Freigabesignal mit einer vorgegebenen codierten Information vergleicht und bei Übereinstimmung ein Ansteuersignal an die Sicherungseinrichtung abgibt, **dadurch gekennzeichnet**, daß die Reizsequenz (Challenge-Signal) (13) aus einem ersten Telegrammteil (13') mit einer Kennung der Sicherungseinrichtung und einem zweiten Telegrammteil (13'') besteht, wobei durch den ersten Telegrammteil (13') die in einem vorgegebenen Bereich eines Senders (9) der Übertragungseinrichtung (2) befindlichen zu der Sicherungseinrichtung passenden Funkschlüssel (1,1a bis 1d) zur gegeneinander versetzten Abgabe je eines Antwortsignals (16a,16b,16c) (Response-Signale) zu unterschiedlichen Zeitpunkten während der Übertragung des zweiten Telegrammteils (13'') angeregt werden, daß das Steuergerät (7) anhand der Antwortsignale (16a, 16b, 16c) einen geeigneten Funkschlüssel (1a) aus der Menge (1,1a bis 1d) auswählt und ein Auswahlsignal (13''') abgibt, welches den ausgewählten Funkschlüssel (1a) zur Abgabe des Freigabesignals (14) veranlaßt.

2. Vorrichtung nach Anspruch 1, **dadurch gekennzeichnet**, daß zur Unterscheidung der Antwortsignale (16a,16b,16c) durch das Steuergerät (7) die Antwortsignale (16a,16b,16c) der Funkschlüssel (1,1a bis 1d) synchron zum zweiten Telegrammteil (13'') ausgebbar sind.

3. Vorrichtung nach einem der vorhergehenden Ansprüche, **dadurch gekennzeichnet**, daß die Antwortsignale (16a,16b,16c) jedes Funkschlüssels (1,1a bis 1d) mit jeweils einer anderen Flanke des zweiten Telegrammteils (13'') synchronisiert sind.

4. Vorrichtung nach Anspruch 1, **dadurch gekennzeichnet**, daß die einzelnen Funkschlüssel (1,1a bis 1d) ihre Antwortsignale (16a,16b,16c) in unterschiedlichen Zeitabständen nach Empfang des ersten Telegrammteils (13') der Reizsequenz (13) aussenden.

5. Vorrichtung nach einem der vorhergehenden Ansprüche, **dadurch gekennzeichnet**, daß die Reizsequenz (13) in einem anderen Frequenzbereich abgestrahlt wird als die Antwortsignale (16a,16b,16c).

6. Vorrichtung nach Anspruch 5, **dadurch gekennzeichnet**, daß die Reizsequenz (13) und das Auswahlsignal (13''') als langwellige Signale und die Antwortsignale (16a,16b,16c) und das Freigabesignal (14) als kurzwellige Signale übertragen werden.

7. Vorrichtung nach Anspruch 6, **dadurch gekennzeichnet**, daß die Übertragungseinrichtung (2) eine erste Recheneinheit (7) und jeder Funkschlüssel (1,1a bis 1d) je eine zweite Recheneinheit (3) aufweist, daß in den Recheneinheiten (7, 3) Algorithmen zur Bestimmung des zweiten Telegrammteils (13'') abgelegt sind und daß der zweite Telegrammteil (13'') nach jeder erfolgten Übertragung mit Hilfe der Algorithmen in den Recheneinheiten (7,3) unabhängig voneinander neu bestimmt wird.

8. Vorrichtung nach Anspruch 5, **dadurch gekennzeichnet**, daß jedes Antwortsignal (16a,16b,16c) weitere für den jeweiligen Funkschlüssel charakteristische Informationen enthält.

9. Verfahren zur Freigabe und/oder Aktivierung/Deaktivierung einer Sicherungseinrichtung, insbesondere einer Vorrichtung nach einem der vorhergehenden Ansprüche, bei welcher nach Erhalt einer durch einen Sender einer Übertragungseinrichtung ausgesendeten Reizsequenz von einer tragbaren Sendeeinheit (Funkschlüssel) ein Freigabesignal ausgesendet und von einem Empfänger der Übertragungseinrichtung empfangen wird, wobei ein Steuergerät das empfangene Freigabesignal mit einer vorgegebenen codierten Information vergleicht und bei Übereinstimmung ein Ansteuersignal an die Sicherungseinrichtung abgibt, **dadurch gekennzeichnet**, daß bei Vorhandensein mehrerer passender Funkschlüsset (1a bis 1d) die Übertragungsqualität zwischen Übertragungseinrichtung (2) und Funkschlüsseln (1a bis 1d) geprüft wird und daß nur derjenige (1a) der Funkschlüssel (1a bis 1d) zur Aussendung eines Freigabesignals (14) herangezogen wird, welcher über die günstigste Übertragungsstrecke zur Übertragung des Freigabesignals (14) verfügt.

10. Verfahren nach Anspruch 9, **dadurch gekennzeichnet**, daß derjenige (1a) der Funkschlüssel (1a bis 1d) ausgewählt wird, dessen Übertragungsstrecke die geringste Dämpfung/störungsärmste Übermittlung der übertragenen Signale aufweist.

11. Verfahren nach Anspruch 10, **dadurch gekennzeichnet**, daß jeder der Funkschlüssel (1a bis 1d) die Feldstärke der von ihm empfangenen Reizsequenz (13) feststellt und daß nur derjenige (1a) der Funkschlüssel zur Aussendung eines Freigabesignals (14) aufgefordert wird, der die größte Empfangsfeldstärke festgestellt hat.

12. Verfahren nach Anspruch 11, **dadurch gekennzeichnet**, daß jeder der Funkschlüssel (1a bis 1d) den festgestellten Wert der Empfangsfeldstärke als Antwortsignal (16a bis 16c) zurücksendet und daß das Steuergerät (7) anhand der erhaltenen Werte den geeigneten Funkschlüssel (1a) auswählt und das Auswahlsignal aussendet.

13. Verfahren nach Anspruch 12, **dadurch gekennzeichnet**, daß der Wert der empfangenen Feldstärke als Breite der Antwortsignale (16a bis 16c) codiert wird.

14. Verfahren nach einem der Ansprüche 12 oder 13, **dadurch gekennzeichnet**, daß aus der Intensität der Antwortsignale auf die Qualität der Rückübertragungsstrecke zwischen den Funkschlüsseln und der Übertragungseinrichtung geschlossen wird und daß ein Funkschlüssel, dessen Antwortsignal zu schwach ist, nicht zur Aussendung des Freigabesignals (14) herangezogen wird.

15. Verfahren nach einem der vorhergehenden Ansprüche, **dadurch gekennzeichnet**, daß jeder der Funkschlüssel die empfangene Reizsequenz wenigstens teilweise unverändert wieder zurücksendet (spiegelt) und daß das Steuergerät anhand von Signaleigenschaften (Empfangsfeldstärken) der wieder zurückerhaltenen Impulse den geeignetsten Funkschlüssel auswählt und das Auswahlsignal aussendet.

16. Verfahren zur Freigabe und/oder Aktivierung/Deaktivierung einer Sicherungseinrichtung, insbesondere einer Vorrichtung nach einem der Ansprüche 1 bis 8, bei welcher nach Erhalt einer durch einen Sender einer Übertragungseinrichtung ausgesendeten Reizsequenz von einer tragbaren Sendeeinheit (Funkschlüssel) ein Freigabesignal ausgesendet und von einem Empfänger der Übertragungseinrichtung empfangen wird, wobei ein Steuergerät das empfangene Freigabesignal mit einer vorgegebenen codierten Information vergleicht und bei Übereinstimmung ein Ansteuersignal an die Sicherungseinrichtung abgibt, **dadurch gekennzeichnet**, daß die Übertragungsqualität zwischen der Übertragungseinheit und den Funkschlüsseln durch Messung der Dauer (t) des eine vorgegebene Empfangsschwelle (41) überschreitenden Teils eines übertragenen Signals (42) ermittelt wird.

17. Verfahren zur Freigabe und/oder Aktivierung/Deaktivierung einer Sicherungseinrichtung, insbesondere einer Vorrichtung nach einem der Ansprüche 1 bis 8, bei welcher nach Erhalt einer durch einen Sender einer Übertragungseinrichtung ausgesendeten Reizsequenz von einer tragbaren Sendeeinheit (Funkschlüssel) ein Freigabesignal ausgesendet und von einem Empfänger der Übertragungseinrichtung empfangen wird, wobei ein Steuergerät das empfangene Freigabesignal mit einer vorgegebenen codierten Information vergleicht und bei Übereinstimmung ein Ansteuersignal an die Sicherungseinrichtung abgibt, **dadurch gekennzeichnet**, daß jeder Funkschlüssel (1) zu einem vorgegebenen Zeitpunkt Teile der Reizsequenz (13) spiegelt, indem er den Signalanteil des Amplitudenverlaufs (42) der Reizsequenz (13), der über seiner Empfangsschwelle (41) liegt, als Impuls (43) der Länge (t) zur Übertragungseinrichtung (2) zurücksendet, wobei die Länge (t) des rückgesendeten Impulses von der Übertragungseinrichtung (2) gemessen und als Entscheidungskriterium für die Auswahl eines bestimmten Funkschlüssels (1) herangezogen wird.
